# EUROPEAN PATENT SPECIFICATION

(11) **EP 3 044 668 B1**
(45) Date of publication and mention of the grant of the patent: **22.08.2018**
(21) Application number: 14809099.6
(22) Date of filing: 03.09.2014
(51) Int. Cl.: H04L 12/26, G06F 9/445, H04W 4/02, G06F 9/44

(54) **SYSTEMS AND METHODS FOR CONTROLLING OPERATING MODES OF SMART PLATFORMS**
SYSTEME UND VERFAHREN ZUR STEUERUNG DER BETRIEBSMODI INTELLIGENTER PLATTFORMEN
SYSTÈMES ET PROCÉDÉS DE COMMANDE DE MODES OPÉRATOIRES DE PLATE-FORMES INTELLIGENTES

(30) Priority: 11.09.2013 US 201361876480 P; 12.09.2013 US 201361876882 P; 12.09.2013 US 201361876894 P; 27.08.2014 US 201414470602
(43) Date of publication of application: 20.07.2016
(73) Proprietor: Marvell World Trade Ltd., St. Michael 14027 (BB)
(72) Inventor: WU, Xi, Shanghai (CN); CHEN, Jialin, Shanghai (CN); CHEN, Xinhao, Shanghai (CN); SHEN, Ping, Shanghai (CN); FANG, Wenzhao, Shanghai (CN)
(74) Representative: Grünecker Patent- und Rechtsanwälte PartG mbB
(86) International application number: PCT/IB2014/002325
(87) International publication number: WO 2015/036863

(56) References cited:
- US-A1- 2011 241 827

## Description

### Field of Use

This disclosure is generally directed to smart platforms, and more particularly to controlling operating modes of smart platforms based on a status change between the smart platforms and at least one external device.

### Background

The background description provided herein is for the purpose of generally presenting the context of the disclosure. Work of the inventors hereof, to the extent the work is described in this background section, as well as aspects of the description that may not otherwise qualify as prior art at the time of filing, are neither expressly nor impliedly admitted as prior art against the present disclosure.

Smart platforms, such as smartphones and smart tablets, may operate in different operating modes. Different operating modes offer different applications, data, and user experience on the same smart platform. For instance, a smartphone may operate in a kid mode in which only a select few children-oriented applications are exposed to the user. In the kid mode, the user is not allowed to access contact information or business emails, so that the owner's important data is not accidentally modified.

A system for controlling operating modes on a smart platform should enable users to conveniently switch among different operating modes, while preserving the security and privacy that certain operating modes demand. Many existing systems and methods require users to navigate through layers of configuration options in order to switch among frequently-accessed operating modes, and therefore are cumbersome to operate. In some other systems, the configuration options are readily exposed to all users, hence forbidding users to discreetly switch among operating modes that are preferably kept in private.

US 2011/0241827 A1 relates to a technique for automatically changing the operating mode of a wireless device. A determination is made whether at least one state of the wireless device has changed. This determination is performed using at least one integrated device of the wireless device. A determination is made whether the change in the state of the wireless device indicates that the first operating mode should be changed. The operating mode is changed to a second operating mode of the wireless device in response to a determination that the change in the state of the wireless device indicates that the first operating mode should be changed. Changing to the second operating mode includes altering at least one wireless communication operation of the wireless device. Examples of the second operating mode may include, but is not limited to, an airplane mode, a train mode, a vehicle mode, an environmental condition mode, or a device-access mode.

### SUMMARY

In view of the foregoing, systems and methods are provided for switching among operating modes on a smart platform. Reference is made to the claims.

According to one aspect of the disclosure, the smart platform can operate under a number of operating modes. The smart platform comprises an application interface, a detection module, and a service module. The application interface receives user input establishing a trigger profile for a first operating mode. The detection module monitors interactions between at least one external device and the smart platform. The detection module also detects a status change between the at least one external device and the smart platform. The service module determines whether the status change meets the trigger profile established for the first operating mode. If the status change meets the trigger profile for the first operating mode, the service module launches the first operating mode on the smart platform.

In some embodiments, the trigger profile is established by defining one or more interactions between the at least one external device and the smart platform for the first operating mode. The first operating mode defines a collection of data, applications, access rights, or operations on the smart platform.

In some embodiments, the service module launches the first operating mode by saving a current operating mode of the smart platform, exiting the current operating mode, retrieving a previously saved operating mode of the smart platform as the first operating mode, and entering the previously saved operating mode.

In some embodiments, the application interface receives user input establishing a trigger profile for a second operating mode of the smart platform and user input performing an operation on the smart platform. In response to determining that the performed operation in conjunction with the status change meets the trigger profile for the second operating mode, the service module launches the second operating mode.

In some embodiments, the status change is a change in the at least one external device's hot-plug connection or disconnection status with the smart platform, a change in location of the at least one external device using a location-based service, or an attenuation of a signal associated with the at least one external device.

In some embodiments, the service module exits the first operating mode in response to powering off a location-based service.

In some embodiments, the attenuation of the signal indicates relative distance between the at least one external device and the smart platform, powering on of the at least one external device, or powering off of the at least one external device.

### Brief Description of the Drawings

Further features of the disclosure, its nature and various advantages will be apparent upon consideration of the following detailed description, taken in conjunction with the accompanying drawings, in which:
FIG. 1 shows a block diagram of an illustrative system architecture for an operating mode control system in accordance with an embodiment of the present disclosure;
FIG. 2 shows a block diagram of an illustrative operating mode control system operating on a smart platform in accordance with an embodiment of the present disclosure; and
FIG. 3 shows a flow diagram for controlling operating modes of a smart platform in accordance with an embodiment of the present disclosure.

### Detailed Description

To provide an overall understanding of the disclosure, certain illustrative embodiments will now be described in connection with systems and methods for controlling operating modes of smart platforms. However, the systems and methods described herein may be adapted and modified as is appropriate for the application being addressed and that the systems and methods described herein may be employed in other suitable applications, and that such other additions and modifications will not depart from the scope thereof.

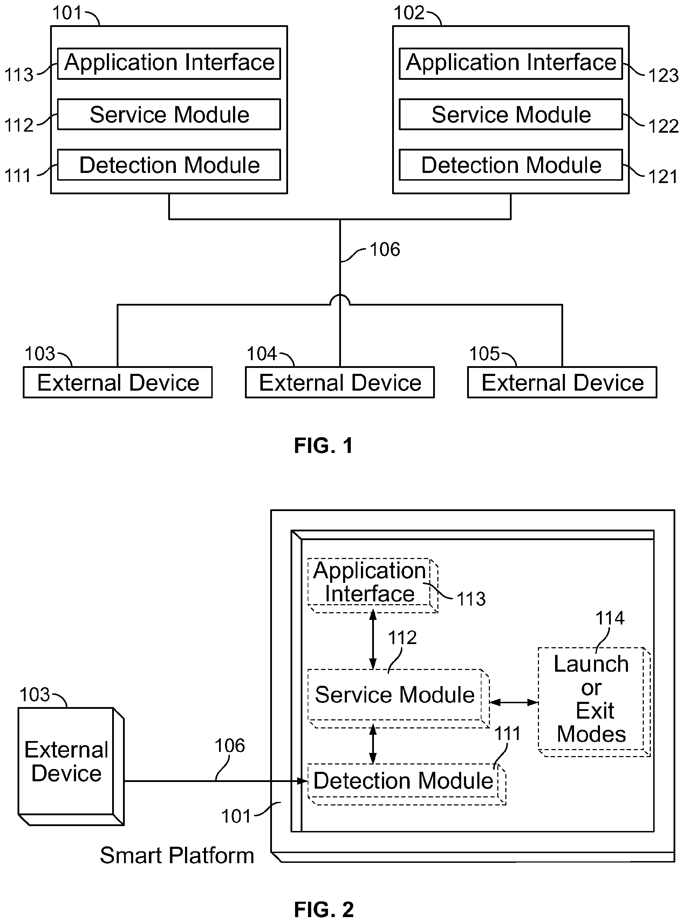

FIG. 1 shows a block diagram of an illustrative system architecture for an operating mode control system in accordance with an embodiment of the present disclosure. Smart platform 101 (or 102) includes detection module 111 (or 121), service module 112 (or 122), and application interface 113 (or 123). Application interface 113 allows a user to establish a trigger profile for an operating mode of smart platform 101. Detection module 111 detects a status change between at least one external device (such as external device 103) and smart platform 101. Service module 112 determines if the status change detected by detection module 111 matches the trigger profile established by the user, and launches or exits operating modes accordingly. In an example, external devices 103, 104, and 105 may be car keys, power cords, earphones, Universal Serial Bus (USB) devices, Subscriber Identification Module (SIM) cards, Secure Digital (SD) cards, Global Positioning System (GPS) devices, Near Field Communications (NFC) tags, Wireless Fidelity (Wi-Fi) tags, or Bluetooth® devices.

Connection 106 represents interactions between smart platforms 101 and 102 on the one hand, and external devices 103, 104, and 105 on the other. In some embodiments, connection 106 may be a physical connection, a wireless connection, or a combination thereof between the external devices and the smart platforms. Detailed description of the interactions will be made apparent in view of FIG. 2 below.

FIG. 2 shows a block diagram of an illustrative operating mode control system operating on a smart platform in accordance with an embodiment of the present disclosure. The smart platform may consist of one or more of control circuitry, display circuitry, storage circuitry, and user input circuitry. In particular, smart platform 101 is equivalent to smart platform 101 or 102 of FIG. 1, and external device 103 is equivalent to external device 103, 104, or 105 of FIG. 1. In an exemplary embodiment, three modules can run on smart platform 101: detection module 111, service module 112, and application interface 113. Service module 112 may advantageously control the launching or exiting of operating modes by a standalone module 114 to launch or exit operating modes.

Application interface 113 receives user input to establish a trigger profile for an operating mode of smart platform 101. In an embodiment, application interface 113 may be a settings or configuration page presented using display circuitry, in which a user can specify (1) an interaction between an external device and the smart platform, and (2) launching, exiting or other actions associated with an operating mode to be performed by service module 112 if the specified interaction occurs. Thereafter, the specified interaction and actions associated with the operating mode are encapsulated into a trigger profile for the operating mode, and the trigger profile is saved in storage circuitry of smart platform 101. For instance, a user may configure the smart platform to enter into "home" mode (i.e., the action associated with an operating mode) if the smart platform and a car key are in proximity of each other and are both located at or near the coordinates of the user's home (i.e., the specified interaction). In this way, the user no longer needs to manually switch into the "home" mode and can instead rely on the automatically detected interaction between the smart platform and the car key to complete this transition seamlessly.

In some embodiments, the trigger profile may additionally specify a user input to the smart platform itself. The user input can be captured by user input circuitry of the smart platform. For example, a trigger profile for launching a kid mode on a smart phone may be specified as unplugging a charging cable while the volume-up button is pressed on the smart phone. Here, pressing the volume-up button is the additional user input required as part of the trigger profile. In this way, the ordinary operation of external devices or accessories (i.e., the charging cable) will not accidentally trigger a switch of operating modes.

Detection module 111 runs on control circuitry of smart platform 101 and monitors the interactions between external devices and the smart platform (*e.g.*, interaction 106). The monitored interactions may include, but are not limited to, an attenuation of communication signals between the external device and the smart platform that falls below a threshold, an unplug action of earphone from the phone jack while the BACKSPACE button is pressed on the smart platform, or the smart platform's close proximity to a GPS-enabled watch. In some embodiments, detection module 111 registers an interaction as a status change between the external device and the smart platform, which is then provided to service module 112 for further processing.

Service module 112 continuously runs on the control circuitry of smart platform 101 in the background and receives established trigger profiles from application interface 113 as well as detected status change from detection module 111. It then determines whether the detected status change meets the established trigger profile by comparing the detected status change against the pre-specified interactions in trigger profiles. If it is determined that the status change matches a particular trigger profile (as previously saved in storage circuitry), the actions specified in the particular trigger profile, such as launching a new operating mode, exiting the current operating mode, or other actions associated with the operating modes, will occur. In some embodiments, service module 112 may cause a notification to be displayed on the smart platform and allow the user to choose if the action as illustrated above should be performed. If, however, the status change does not match the trigger profile, no action will be performed.

In a preferred embodiment, launching the new operating mode involves saving the current operating mode on storage circuitry and exiting the current operating mode. In this way, user activities and modifications under the current operating mode can be preserved for future use. In another embodiment, launching the new operating mode involves retrieving a previously-saved operating mode from storage circuitry and entering the previously-saved operating mode.

In the exemplary embodiments described above, the switching of operating modes can be conveniently accomplished without a need to go through layers configuration options. Another advantage of the present disclosure is that the trigger profiles can specify a set of low-profile interactions between external devices and the smart platform, such that the operating modes can be launched and exited in a discreet manner. In this way, the switching of operating modes is only known to and performed by the relevant users and therefore offers a more secure and private environment. For example, some smart tablet users who keep private information on a shared tablet may, out of an abundance of caution, wish to not let other users realize that such private information exists at all. In situations like this, the cautious user may utilize the systems and methods disclosed herein to discreetly switch the tablet into a private mode without raising unnecessary suspicion, as might be in the case of an ordinary password-protected log-in system.

The following exemplary embodiments serve to illustrate the principles of operation for the smart platform system as described in relation to FIGS. 1 and 2.

### I. Hot-plug-based Systems

An application interface displays configuration information relevant to controlling the operating modes (*e.g*., a "private" mode and a "public" mode) of a smart platform (*e.g*., a smartphone). In particular, the application interface may display an operating mode boot screen in order to guide a user to set up different operating modes and their respective trigger profiles on the smart platform. An external device (*e.g.*, a USB charging cable) can be connected to the smart platform via a hot plug connection (*e.g*., a USB connection). When the external device is plugged in or out of the smart platform, a change of the hot-plug status can be detected by a detection module of the smart platform. In response, a service module that runs in the background receives the detected status change from the detection module, and causes the smart platform to be switched into a new operating mode. After completing the desired operations in the new operating mode, a user can either repeat the above steps, or enter a password to revert the smart platform back to its original operating mode, in accordance with the user's configuration in the application interface.

### II. Location-based Systems

An application interface operates in substantially the same manner as described above in relation to the first exemplary embodiment: Hot-plug-based Systems. One or more external devices may be capable of receiving and transmitting its own location using a Global Positioning System (GPS) or an equivalent location-based service. When the external devices move from location A to location B, a detection module of a smart platform (*e.g*., smartphone) detects the change in location of the external devices. In response, a service module that runs in the background receives the detected change in location from the detection module, and causes the smart platform to be switched into a new operating mode. In some embodiments, the smart platform may exit the new operating mode when the location-based service is powered off. Some smart platforms are also GPS-enabled. In such smart platforms, a relative location between the external devices and the smart platform can be detected and used to trigger the operating mode switch. For example, a GPS-enabled smartphone will enter a "stolen" mode when it is located more than one mile away from a GPS-enabled smart watch (*i.e*., the external device). In this manner, a stolen smartphone will be automatically locked down before the user realizes so, and without a need for the user to perform a remote lock-down operation. The manner in which the operating mode is switched from normal operation to "stolen" mode is thus more convenient for the user than existing technologies could provide.

### III. Signal-strength-based Systems

An application interface operates in substantially the same manner as described above in relation to the first exemplary embodiment: Hot-plug-based Systems. An external device (*e.g*., a Bluetooth®-enabled car key) can be connected to a smart platform (*e.g*., smartphone) via a wireless connection (*e.g*., Bluetooth® communication). In one embodiment, when the external device is moving away from the smart platform, a detection module of the smart platform can detect the signal attenuation in the Bluetooth® communication link. As the signal strength attenuates below a threshold, a service module that runs in the background may receive a notification of the status change from the detection module, and causes the smart platform to be switched into a new operating mode.

In another embodiment, the signal attenuation may indicate the powering on or off of an external device, such that a new operating mode is launched when the external device is powered on, and exited when the external device is powered off.

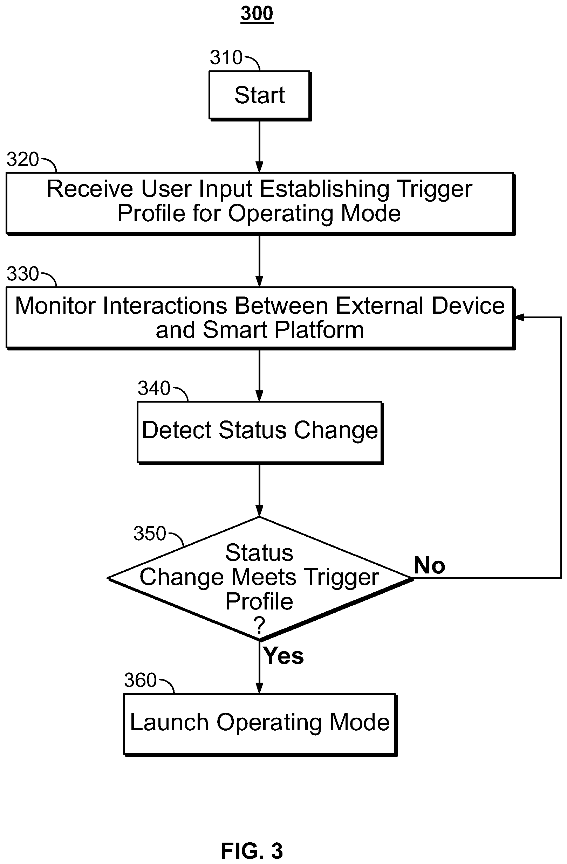

FIG. 3 is a flow diagram of an illustrative process 300 for controlling operating modes of a smart platform, in accordance with an embodiment of the present disclosure. At 310, the smart platform is turned on and operational. At 320, the smart platform receives user input via application interface 113 running on user input circuitry to establish a trigger profile for an operating mode. The user input circuitry may be a keyboard, touchscreen, joystick, or any other input circuitry as understood by one skilled in the art. The user input may also be transferred from another media device connected with the smart platform, such as a computing device connected with a cell phone by USB cable, Wi-Fi communications, or the internet. At 330, a detection module running on control circuitry of the smart platform, such as detection module 111, monitors interactions between external devices and the smart platform. As described above in relation to FIG. 2, the interactions between external devices and the smart platform can take on many different forms, each of which may be explicitly defined in a trigger profile for a particular operating mode so that an interaction can be associated with the particular operating mode. At 340, detection module 111 detects a status change between the external devices and the smart platform. In some embodiments, the status change may simply be a pre-defined interaction between at least one external device and the smart platform. In other embodiments, the status change represents a deviation from the existing state of communication between the at least one external device and the smart platform. Exemplary embodiments of the status change are illustrated above in relation to FIG. 2. At 350, service module 112 running on the control circuitry of the smart platform determines whether the status change meets the trigger profile of any operating mode. If the status change meets the trigger profile of a particular operating mode, the operating mode is launched at 360. On the other hand, if the status change does not meet any trigger profiles, service module 112 does not perform any actions and return to running in the background. At this point, detection module 111 will continue to monitor interactions between external devices and the smart platform, at 330, and detect any future status changes.

While various embodiments of the present disclosure have been shown and described herein, it will be obvious to those skilled in the art that such embodiments are provided by way of example only. Numerous variations, changes, and substitutions will now occur to those skilled in the art without departing from the disclosure. It should be understood that various alternatives to the embodiments of the disclosure described herein may be employed in practicing the disclosure. It is intended that the following claims define the scope of the disclosure and that methods and structures within the scope of these claims and their equivalents be covered thereby.

## Claims

1. A device (101, 102) for launching operating modes, the device comprising:
an application interface (113, 123) configured to receive user input establishing a trigger profile for a first operating mode of the device;
a detection module (111, 121) configured to:
monitor interactions between at least one external device (103, 104, 105) and the device, wherein the device is configured to be connectable to the at least one external device via a hot plug connection; and
detect a status change between the at least one external device and the device, wherein the status change is a change in the at least one external device's hot-plug connection or disconnection status with the device; and
a service module (112, 122) configured to:
determine whether the status change meets the trigger profile for the first operating mode; and
launch the first operating mode on the device in response to determining that the status change meets the trigger profile for the first operating mode.

2. The device of claim 1, wherein the trigger profile is established by defining one or more interactions between the at least one external device and the device for the first operating mode.

3. The device of claim 1, wherein the first operating mode defines a collection of data, applications, access rights, or operations on the device.

4. The device of claim 1, wherein:
the application interface is further configured to:
receive user input establishing a trigger profile for a second operating mode of the device; and
receive user input performing an operation on the device; and
the service module is further configured to:
launch the second operating mode on the device in response to determining that the performed operation in conjunction with the status change meets the trigger profile for the second operating mode.

5. The device of claim 1, wherein:
the status change is a change in location of the at least one external device using a location-based service, and the service module is further configured to exit the first operating mode in response to powering off the location-based service.

6. The device of claim 1, wherein the status change is an attenuation of a signal associated with the at least one external device.

7. The device of claim 6, wherein the attenuation of the signal indicates relative distance between the at least one external device and the device, powering on of the at least one external device, or powering off of the at least one external device.

8. The device of claim 6, wherein the service module is further configured to launch the first operating mode by:
saving a current operating mode of the device;
exiting the current operating mode;
retrieving a previously saved operating mode of the device as the first operating mode; and
entering the previously saved operating mode.

9. A method for launching operating modes on a device, the method comprising:
receiving (320), with an application interface, user input establishing a trigger profile for a first operating mode of the device;
monitoring (330) interactions between at least one external device and the device, wherein the device is connectable to the at least one external device via a hot plug connection;
detecting (340), using a detection module, a status change between the at least one external device and the device, wherein the status change is a change in the at least one external device's hot-plug connection or disconnection status with respect to the device;
determining (350) whether the status change meets the trigger profile for the first operating mode; and
in response to determining that the status change meets the trigger profile for the first operating mode, launching (360) the first operating mode on the device.

10. The method of claim 9, wherein:
receiving user input establishing a trigger profile comprises defining one or more interactions between the at least one external device and the device for the first operating mode; and/or
the first operating mode defines a collection of data, applications, access rights, or operations on the device.

11. The method of claim 9, further comprising:
receiving user input establishing a trigger profile for a second operating mode of the device;
receiving user input performing an operation on the device; and
launching the second operating mode on the device in response to determining that the performed operation in conjunction with the status change meets the trigger profile for the second operating mode.

12. The method of claim 9, wherein:
the status change is a change in location of the at least one external device using a location-based service, and the method further comprises exiting the first operating mode in response to powering off the location-based service.

13. The method of claim 9, wherein the status change is an attenuation of a signal associated with the at least one external device.

14. The method of claim 13, wherein:
the attenuation of the signal indicates relative distance between the at least one external device and the device, powering on of the at least one external device, or powering off of the at least one external device; and/or
launching the first operating mode comprises
saving a current operating mode of the device,
exiting the current operating mode,
retrieving a previously saved operating mode of the device as the first operating mode, and
entering the previously saved operating mode.

15. A computer-readable medium comprising computer-executable instructions that when executed cause a processor to perform the method of any of claims 9 to 14.

## Patentansprüche

1. Vorrichtung (101, 102) zum Starten von Betriebsarten, wobei die Vorrichtung umfasst:
eine Anwendungsschnittstelle (113, 123), die dazu eingerichtet ist, eine Benutzereingabe zu empfangen, die ein Auslöserprofil für eine erste Betriebsart der Vorrichtung erstellt;
ein Erfassungsmodul (111, 121), das dazu eingerichtet ist:
Interaktionen zwischen wenigstens einer externen Vorrichtung (103, 104, 105) und der Vorrichtung zu überwachen, wobei die Vorrichtung dazu eingerichtet ist, über eine Hot-Plug-Verbindung mit der wenigstens einen externen Vorrichtung verbunden werden zu können; und
eine Statusänderung zwischen der wenigstens einen externen Vorrichtung und der Vorrichtung zu erfassen, wobei die Statusänderung eine Änderung des Hot-Plug-Verbindungs- oder Trennstatus der wenigstens einen externen Vorrichtung mit der Vorrichtung ist; und
ein Dienstemodul (112, 122), das dazu eingerichtet ist:
zu bestimmen, ob die Statusänderung das Auslöserprofil für die erste Betriebsart erfüllt; und
die erste Betriebsart an der Vorrichtung als Reaktion auf das Ermitteln zu starten, dass die Statusänderung das Auslöserprofil für die erste Betriebsart erfüllt.

2. Vorrichtung nach Anspruch 1, bei der das Auslöserprofil durch Definieren einer oder mehrerer Interaktionen zwischen der wenigstens einen externen Vorrichtung und der Vorrichtung für die erste Betriebsart eingerichtet wird.

3. Vorrichtung nach Anspruch 1, bei der die erste Betriebsart eine Sammlung von Daten, Anwendungen, Zugriffsrechten oder Operationen auf der Vorrichtung definiert.

4. Vorrichtung nach Anspruch 1, bei der:
die Anwendungsschnittstelle weiterhin dazu eingerichtet ist:
eine Benutzereingabe zu empfangen, die ein Auslöserprofil für eine zweite Betriebsart der Vorrichtung erstellt; und
eine Benutzereingabe zu empfangen, die eine Operation an der Vorrichtung ausführt; und
das Dienstemodul weiterhin dazu eingerichtet ist:
die zweite Betriebsart an der Vorrichtung als Reaktion auf das Bestimmen zu starten, dass der ausgeführte Vorgang in Verbindung mit dem Statuswechsel das Auslöserprofil für die zweite Betriebsart erfüllt.

5. Vorrichtung nach Anspruch 1, bei der:
die Statusänderung eine Standortänderung der wenigstens einen externen Vorrichtung unter Verwendung eines ortsbasierten Dienstes ist und das Dienstemodul ferner dazu eingerichtet ist, die erste Betriebsart als Reaktion auf das Ausschalten des ortsbasierten Dienstes zu verlassen.

6. Vorrichtung nach Anspruch 1, bei der die Statusänderung eine Dämpfung eines Signals ist, das der wenigstens einen externen Vorrichtung zugeordnet ist.

7. Vorrichtung nach Anspruch 6, bei der die Dämpfung des Signals den relativen Abstand zwischen der wenigstens einen externen Vorrichtung und der Vorrichtung, das Einschalten der wenigstens einen externen Vorrichtung oder das Ausschalten der wenigstens einen externen Vorrichtung angibt.

8. Vorrichtung nach Anspruch 6, bei der das Dienstemodul ferner dazu eingerichtet ist, die erste Betriebsart zu starten durch:
Speichern einer aktuellen Betriebsart der Vorrichtung;
Verlassen der aktuellen Betriebsart;
Abrufen einer zuvor gespeicherten Betriebsart der Vorrichtung als die erste Betriebsart; und
Eingabe der zuvor gespeicherten Betriebsart.

9. Verfahren zum Starten von Betriebsarten auf einer Vorrichtung, wobei das Verfahren umfasst:
Empfangen (320) einer Benutzereingabe mit einer Anwendungsschnittstelle, die ein Auslöserprofil für eine erste Betriebsart der Vorrichtung erstellt;
Überwachen (330) von Wechselwirkungen zwischen wenigstens einer externen Vorrichtung und der Vorrichtung, wobei die Vorrichtung über eine Hot-Plug-Verbindung mit der wenigstens einen externen Vorrichtung verbunden werden kann;
Erfassen (340), unter Verwendung eines Erfassungsmoduls, einer Statusänderung zwischen der wenigstens einen externen Vorrichtung und der Vorrichtung, wobei die Statusänderung eine Änderung des Hot-Plug-Verbindungs- oder Trennungsstatus der wenigstens einen externen Vorrichtung in Bezug auf die Vorrichtung ist ;
Bestimmen (350), ob die Statusänderung das Auslöserprofil für die erste Betriebsart erfüllt; und
als Reaktion auf das Bestimmen, dass die Statusänderung das Auslöseprofil für die erste Betriebsart erfüllt, Starten (360) der ersten Betriebsart auf der Vorrichtung.

10. Verfahren nach Anspruch 9, bei dem:
das Empfangen einer Benutzereingabe, die ein Auslöserprofil erstellt, das Definieren einer oder mehrerer Interaktionen zwischen der wenigstens einen externen Vorrichtung und der Vorrichtung für die erste Betriebsart umfasst; und/oder
die erste Betriebsart eine Sammlung von Daten, Anwendungen, Zugriffsrechten oder Operationen auf der Vorrichtung definiert.

11. Verfahren nach Anspruch 9, weiterhin umfassend:
Empfangen einer Benutzereingabe, die ein Auslöserprofil für eine zweite Betriebsart der Vorrichtung festlegt;
Empfangen einer Benutzereingabe, die eine Operation an der Vorrichtung ausführt; und
Starten der zweiten Betriebsart auf der Vorrichtung als Reaktion auf das Bestimmen, dass der durchgeführte Vorgang in Verbindung mit der Statusänderung das Auslöserprofil für die zweite Betriebsart erfüllt.

12. Verfahren nach Anspruch 9, bei dem:
die Statusänderung eine Standortänderung der wenigstens einen externen Vorrichtung unter Verwendung eines ortsbasierten Dienstes ist und das Verfahren ferner das Verlassen der ersten Betriebsart als Reaktion auf das Ausschalten des ortsbasierten Dienstes umfasst.

13. Verfahren nach Anspruch 9, bei dem die Statusänderung eine Dämpfung eines Signals ist, das der wenigstens einen externen Vorrichtung zugeordnet ist.

14. Verfahren nach Anspruch 13, bei dem:
die Dämpfung des Signals den relativen Abstand zwischen der wenigstens einen externen Vorrichtung und der Vorrichtung, das Einschalten der wenigstens einen externen Vorrichtung oder das Ausschalten der wenigstens einen externen Vorrichtung umfasst; und/oder
das Starten der ersten Betriebsart umfasst:
Speichern einer aktuellen Betriebsart der Vorrichtung,
Verlassen der aktuellen Betriebsart,
Abrufen einer zuvor gespeicherten Betriebsart der Vorrichtung als erste Betriebsart, und
Eingabe der zuvor gespeicherten Betriebsart.

15. Computerlesbares Medium, das computerausführbare Anweisungen umfasst, die, wenn sie ausgeführt werden, einen Prozessor veranlassen, das Verfahren nach einem der Ansprüche 9 bis 14 auszuführen.

## Revendications

1. Dispositif (101, 102) pour lancer des modes de fonctionnement, le dispositif comportant :
une interface d'application (113, 123) configurée pour recevoir une saisie utilisateur établissant un profil de déclenchement d'un premier mode de fonctionnement du dispositif ;
un module de détection (111, 121) configuré pour :
surveiller des interactions entre au moins un dispositif externe (103, 104, 105) et le dispositif, où le dispositif est configuré pour pouvoir être connecté à l'au moins un dispositif externe via une connexion à chaud ; et
détecter un changement d'état entre l'au moins un dispositif externe et le dispositif, où le changement d'état est un changement de l'état de connexion à chaud ou de déconnexion de l'au moins un dispositif externe avec le dispositif ; et
un module de service (112, 122) configuré pour :
déterminer si le changement d'état correspond au profil de déclenchement du premier mode de fonctionnement ; et
lancer le premier mode de fonctionnement dans le dispositif en réponse au fait d'avoir déterminé que le changement d'état correspond au profil de déclenchement du premier mode de fonctionnement.

2. Dispositif selon la revendication 1, dans lequel le profil de déclenchement est établi en définissant une ou plusieurs interactions entre l'au moins un dispositif externe et le dispositif pour le premier mode de fonctionnement.

3. Dispositif selon la revendication 1, dans lequel le premier mode de fonctionnement définit un ensemble de données, d'applications, de droits d'accès ou d'opérations dans le dispositif.

4. Dispositif selon la revendication 1, dans lequel :
l'interface de l'application est en outre configurée pour :
recevoir une saisie utilisateur établissant un profil de déclenchement d'un second mode de fonctionnement du dispositif ; et
recevoir une saisie utilisateur effectuant une opération dans le dispositif ; et
le module de service est en outre configuré pour :
lancer le second mode de fonctionnement dans le dispositif en réponse au fait de déterminer que l'opération en cours d'exécution, conjointement avec le changement d'état, correspond au profil de déclenchement du second mode de fonctionnement.

5. Dispositif selon la revendication 1, dans lequel :
le changement d'état est un changement d'emplacement de l'au moins un dispositif externe utilisant un service fondé sur l'emplacement, et le module de service est en outre configuré pour quitter le mode de fonctionnement en réponse à l'arrêt du service fondé sur l'emplacement.

6. Dispositif selon la revendication 1, dans lequel le changement d'état est une atténuation d'un signal associé à l'au moins un dispositif externe.

7. Dispositif selon la revendication 6, dans lequel l'atténuation du signal indique une distance relative entre l'au moins un dispositif externe et le dispositif, le démarrage de l'au moins un dispositif externe, ou l'arrêt de l'au moins un dispositif externe.

8. Dispositif selon la revendication 6, dans lequel le module de service est en outre configuré pour lancer le premier mode de fonctionnement :
en enregistrant un mode de fonctionnement actuel du dispositif ;
en quittant le mode de fonctionnement actuel :
en récupérant un mode de fonctionnement du dispositif précédemment enregistré en tant que premier mode de fonctionnement ; et
en entrant dans le mode de fonctionnement précédemment enregistré.

9. Procédé de lancement de modes de fonctionnement d'un dispositif, le procédé comportant :
la réception (320) par l'intermédiaire une interface d'application, d'une saisie utilisateur établissant un profil de déclenchement d'un premier mode de fonctionnement du dispositif ;
la surveillance (330) d'interactions entre au moins un dispositif externe et le dispositif, où le dispositif peut être connecté à l'au moins un dispositif externe via une connexion à chaud ;
détecter (340), au moyen d'un module de détection, un changement d'état entre l'au moins un dispositif externe et le dispositif, où le changement d'état est un changement de l'état de connexion à chaud ou de déconnexion de l'au moins un dispositif externe avec le dispositif ; et
déterminer (350) si le changement d'état correspond au profil de déclenchement du premier mode de fonctionnement ; et
en réponse au fait d'avoir déterminé que le changement d'état correspond au profil de déclenchement du premier mode de fonctionnement, lancer (360) le premier mode de fonctionnement dans le dispositif.

10. Procédé selon la revendication 9, dans lequel :
la réception de la saisie utilisateur établissant un profil de déclenchement comporte la définition d'une ou plusieurs interactions entre l'au moins un dispositif externe et le dispositif, pour le premier mode de fonctionnement ; et/ou
le premier mode de fonctionnement définit un ensemble de données, d'applications, de droits d'accès ou d'opérations dans le dispositif.

11. Procédé selon la revendication 9, comportant en outre :
la réception d'une saisie utilisateur établissant un profil de déclenchement d'un second mode de fonctionnement du dispositif ;
la réception d'une saisie utilisateur effectuant une opération dans le dispositif ; et
le lancement du second mode de fonctionnement dans le dispositif en réponse au fait de déterminer que l'opération en cours d'exécution, conjointement avec le changement d'état, correspond au profil de déclenchement du second mode de fonctionnement.

12. Procédé selon la revendication 9, dans lequel :
le changement d'état est un changement d'emplacement de l'au moins un dispositif externe utilisant un service fondé sur l'emplacement, et le procédé comporte en outre le fait de quitter le mode de fonctionnement en réponse à l'arrêt du service fondé sur l'emplacement.

13. Procédé selon la revendication 9, dans lequel le changement d'état est une atténuation d'un signal associé à l'au moins un dispositif externe.

14. Procédé selon la revendication 13, dans lequel :
l'atténuation du signal indique une distance relative entre l'au moins un dispositif externe et le dispositif, le démarrage de l'au moins un dispositif externe, ou l'arrêt de l'au moins un dispositif externe ; et/ou
le lancement du premier mode de fonctionnement comporte
l'enregistrement d'un mode de fonctionnement actuel du dispositif ;
la fermeture du mode de fonctionnement actuel :
la récupération d'un mode de fonctionnement du dispositif précédemment enregistré en tant que premier mode de fonctionnement ; et
l'entrée dans le mode de fonctionnement précédemment enregistré.

15. Support lisible par ordinateur comportant des instructions exécutables par un ordinateur qui, lorsqu'elles sont exécutées, amènent un processeur à mettre en oeuvre le procédé selon l'une quelconque des revendications 9 à 14.
